# EUROPÄISCHE PATENTANMELDUNG

(11) **EP 0 569 877 A1**
(43) Veröffentlichungstag der Anmeldung: **18.11.1993**
(21) Anmeldenummer: 93107439.7
(22) Anmeldetag: 07.05.1993
(51) Int. Cl.: B01D 53/36, B01J 33/00, B01J 37/02

(54) **Tieftemperatur-Entstickung von Rauchgasen**

(30) Priorität: 12.05.1992 DE 4215582
(71) Anmelder: Degussa Aktiengesellschaft, D-60311 Frankfurt (DE)
(72) Erfinder: Blumrich, Stephan, W-6454 Bruchköbel 3 (DE); Engler, Bernd, Dr., W-6450 Hanau 9 (DE); Kunze, Lutz, W-6203 Hochheim (DE); Laubenstein, Stephan, W-6000 Frankfurt 50 (DE); Peldszus, Erik, W-6467 Hasselroth 1 (DE); Müller, Herbert, Dr., W-8755 Michelbach-Alzenau (DE)

(57) **Zusammenfassung**

Gegenstand der Erfindung ist ein Katalysator zur Tieftemperatur-Entstickung von Rauchgasen. Ein an sich bekannter DENOX-Katalysator kann durch Hydrophobierung in seiner Aktivität bezüglich der Entstickung von Rauchgasen bei tiefen Temperaturen wesentlich verbessert werden.

## Beschreibung

Die Erfindung betrifft einen Katalysator zur Tieftemperatur-Entstickung von Rauchgasen nach dem Verfahren der selektiven katalytischen Reduktion (SCR), sowie ein Verfahren zu seiner Herstellung und ein Verfahren zur Tieftemperatur-Entstickung unter Verwendung des Katalysators.

Die erfolgreiche Bekämpfung der zunehmenden Umweltverschmutzung macht es notwendig, alle Möglichkeiten zur Verminderung von Emissionen auszuschöpfen. Hauptluftverschmutzer sind Verbrennungsprozesse zur Erzeugung von mechanischer oder thermischer Energie aus fossilen Brennstoffen. Dabei entstehen unter anderem Stickoxide, die eine Ursache für den sauren Regen sind. Zur Beseitigung der Stickoxide aus Rauchgasen von Kesselfeuerungen hat sich das Verfahren der selektiven katalytischen Reduktion weitgehend durchgesetzt (SCR-Verfahren; 'selective catalytic reduction'). Dabei werden die Stickoxide unter Zugabe eines Reduktionsmittels, vorzugsweise Ammoniak, an einem geeigneten Katalysator zu Stickstoff und Wasser umgesetzt. Die dazu notwendigen Katalysatoren sind zum Beispiel in den deutschen Patentschriften DE 38 41 990 und DE 39 06 136 beschrieben. Sie werden als DENOX-Katalysatoren bezeichnet.

Als katalytisch aktive Komponenten kommen Vanadinpentoxid, verschieden dotierte Zeolithe und auch Eisen zum Einsatz. Alle Katalysatoren müssen allerdings in einem bestimmten Betriebstemperaturbereich arbeiten.

Problematisch bei hohen Temperaturen ist die schneller voranschreitende Alterung der Katalysatoren, bei niedrigen Temperaturen treten Deaktivierungsprozesse durch Maskierung der aktiven Zentren, durch z.B. Ammoniumsalze oder Wasserbelegung auf. Meist sind diese Deaktivierungen reversibel, d. h. durch ein Aufheizen des Katalysators können die maskierenden Stoffe ausgetrieben werden. In diesen Rauchgasreinigungsanlagen müssen aber die dafür notwendigen Aufheizeinrichtungen installiert sein und intermittierend betrieben werden. Die Kosten für die dafür notwendigen Investitionen sind so erheblich, daß diese Technik nur In Ausnahmefällen zum Einsatz kommt.

Besonders ungünstige Verhältnisse für DENOX-Katalysatoren liegen bei den Abgasen von Müllverbrennungsanlagen vor. Charakteristisch für heutige Rauchgasreinigungsanlagen hinter Müllverbrennungsanlagen ist die Notwendigkeit einer fast vollständigen Entfernung aller Schadstoffe aus den Abgasen. Als vorteilhaft dafür haben sich Reinigungsstufen aus verschiedenartigen Kohlefiltern (Aktivkohle/Herdofenkoks) oder mit Kalk-Aktivkohlegemischen beaufschlagte Gewebefilter (Flugstromverfahren) erwiesen. Diese Filter werden üblicherweise bei Temperaturen zwischen 80 und 160° C betrieben, vorzugsweise zwischen 100 und 140° C. Auch hat sich gezeigt, daß eine diesen Filtern nachgeschaltete Entstickungsstufe nach dem Verfahren der selektiven katalytischen Reduktion sehr effektiv arbeiten kann, da das Abgas weitestgehend frei von Oxiden des Schwefels ist und somit die Gefahr einer Katalysatormaskierung durch Ammoniumsalze nicht gegeben ist. Als aktivitätsmindernd hat sich Jedoch der üblicherweise vorliegende hohe Wassergehalt (> 25 Vol.-%) dieser Rauchgase herausgestellt.

Aufgabe der vorliegenden Erfindung ist es deshalb, einen Katalysator zur Verfügung zu stellen, der auch bei hohen Wassergehalten im Abgas seine Aktivität bezüglich der Entstickung weitestgehend beibehält und zufriedenstellend arbeitet. Eine weitere Aufgabe der Erfindung ist die Angabe eines Herstellungsverfahrens für den Katalysator sowie die Angabe eines Verfahrens zur Tieftemperatur-Entstickung unter Anwendung des Katalysators.

Die erste Aufgabe wird erfindungsgemäß dadurch gelöst, daß ein an sich bekannter DENOX-Katalysator hydrophob beschichtet ist. Das Hydrophobierungsmittel muß bestimmte Anforderungen erfüllen. Es darf keine Katalysatorgifte enthalten und muß als Beschichtung auf dem Katalysator eine ausreichende Diffusion der Reaktanden, namentlich Stickoxide und Ammoniak, zulassen und gleichzeitig ausreichende hydrophobe Eigenschaften aufweisen, um die Desaktivierung des Katalysators durch Wasser aus dem im Rauchgas enthaltenen Wasserdampf wirksam zu unterdrücken.

Geeignete Hydrophobierungsmittel sind hochtemperaturbeständige Polymere, insbesondere Fluorpolymere. Fluorpolymere umfassen bekanntlich eine Gruppe von verschiedenen, polymerisierten Fluorolefinen sowie deren Copolymerisate mit anderen Monomeren. Sie weisen einen hohen Schmelzpunkt im Bereich zwischen 200 und 350° C auf, abhängig vom jeweiligen Polymer, und zeigen gute hydrophobe Eigenschaften. Eine ausführliche Beschreibung dieser Polymere und ihrer Eigenschaften ist im Kapitel "Fluorpolymers, Organic" in Ullmann's Encyclopedia of Industrial Chemistry, 5. edition, Volume A 11, Seiten 393 bis 429 zu finden.

Für die Erfindung geeignet sind Polytetrafluorethylen (PTFE), fluoriertes Ethylen-Propylen (FEP) sowie ähnliche Polymere und Copolymere. PTFE ist dabei für höchste Temperaturbelastungen bei der Abgasreinigung geeignet. Es weist einen Schmelzpunkt von etwa 330° C auf und beginnt sich erst bei Temperaturen oberhalb von 440° C zu zersetzen.

Fluorpolymere sind kommerziell als wäßrige Dispersionen mit unterschiedlichen mittleren Partikelgrößen erhältlich. Die gebräuchlichsten Dispersionen weisen mittlere Partikelgrößen von etwa 0,2 µm auf. Die Dispersionen sind mit einer nichtionischen, oberflächenaktiven Substanz stabilisiert und gewöhnlich auf einen Feststoffgehalt von 60 bis 65 % konzentriert.

Einen erfindungsgemäßen Katalysator erhält man durch Beschichten eines üblichen DENOX-Katalysators mit dem Fluorpolymer. Die Beschichtung kann durch Besprühen mit der wäßrigen Dispersion des Fluorpolymers oder durch Tauchen des Katalysators in die Dispersion erfolgen. Zweckmäßigerweise wird die Konzentration der Dispersion vor der Beschichtung auf einen Feststoffgehalt von etwa 2 bis 15 Gew.-% verdünnt. Danach wird der beschichtete Katalysatorkörper bei Temperaturen von 100 bis 140° C bis zur Gewichtskonstanz getrocknet. Der so behandelte Katalysator ist auf seiner Oberfläche mit den Partikeln der Dispersion beschichtet. Die Beschichtungsmenge sollte in einem Bereich von 0,1 bis 5 % des Gesamtgewichtes des Katalysators liegen. Falls erforderlich, kann die beschriebene Prozedur mehrfach wiederholt werden.

Nach dieser Beschichtungsprozedur schließt sich ein Temperaturschritt an, wobei der Katalysator auf eine Temperatur oberhalb des Schmelzpunktes des Fluorpolymers erwärmt wird.

Der Temperschritt dient zum Einschmelzen der auf der Oberfläche des Katalysators abgeschiedenen Polymer-Partikel und Ausbilden der hydrophoben Beschichtung. Im Falle von PTFE liegen die Tempertemperaturen zwischen 340 und 380° C, und die Temperdauer beträgt 1 bis 3 Stunden. Beim Tempern muß darauf geachtet werden, daß die Temperatur nicht über die thermische Zersetzungstemperatur des Polymers hinaus erhöht wird.

Zur Tieftemperatur-Entstickung von Rauchgasen wird dieser Katalysator hinter die üblicherweise zur Rauchgasreinigung verwendeten Filter in den Rauchgasstrom eingesetzt. Die in den Rauchgasen noch enthaltenen Stickoxide werden unter Zugabe eines Reduktionsmittels, vorzugsweise Ammoniak, bei Temperaturen zwischen 130 und 350° C an dem erfindungsgemäßen Katalysator zu Stickstoff und Wasser reduziert.

Hydrophobierte Katalysatoren sind auch schon aus der deutschen Patentschrift DE 37 35 758 bekannt. Es handelt sich dabei um mit Edelmetallen dotierte Katalysatoren auf Aktivkohle zur Reduktion von Sauerstoff in wäßrigen Medien unter Zugabe von Wasserstoffgas bei Temperaturen bis maximal 60° C. Die dort vorgestellten Versuchsergebnisse lassen keine besonderen Vorteile der hydrophobierten Katalysatoren bei der Reduktion von Sauerstoff in wäßrigen Medien erkennen. Um so überraschender und unerwarteter für den Fachmann waren die positiven Auswirkungen der Hydrophobierung von DENOX-Katalysatoren bei der Tieftemperatur-Entstickung von Rauchgasen. Die hydrophob behandelten Katalysatoren weisen im Temperaturbereich von 130 bis 350° C erhebliche Aktivitätsvorteile gegenüber den unbehandelten Katalysatoren auf.

Die Erfindung wird nun an Hand von Beispielen näher erläutert. Es zeigen:
- Figur 1:: NO_{X} Umsätze eines Vergleichs- und eines erfindungsgemäßen Katalysators in Abhängigkeit vom Wassergehalt eines Synthesegases
- Figur 2:: NO_{X} Umsätze eines Vergleichs- und eines erfindungsgemäßen Katalysators in Abhängigkeit vom Wassergehalt des Rauchgases in einer Pilotanlage
- Figur 3:: NO_{X}-Umsätze eines Vergleichs- und eines erfindungsgemäßen Katalysators in Abhängigkeit von der Temperatur des Rauchgases der Pilotanlage

### Vergleichsbeispiel 1: Herstellung eines Vergleichskatalysators

Ein Vergleichskatalysator aus TiO₂/WO₃/V₂O₅ wurde gemäß der Rezeptur von Beispiel 5 aus der DE 39 06 136 als Vollkatalysator in Form eines monolithischen Wabenkörpers hergestellt. Der Wabenkörper hatte eine Dichte von etwa 700 kg/m³ und eine geometrische Oberfläche von 750 m²/m³.

### Beispiel 1: Herstellung eines erfindungsgemäßen Katalysators

Ein nach Vergleichsbeispiel 1 hergestellter Katalysator wurde durch ein einmaliges Tauchen in eine auf 5 Gew.-% verdünnte Dispersion eines PTFE-Pulvers (30 N von DuPont, Korndurchmesser: 0,18 - 0,23 µm) beschichtet. Anschließend wurde der Katalysator bei 120° C getrocknet und bei 350° C im Luftstrom über drei Stunden getempert. Der fertige Katalysator wies eine Beschichtung aus 1,5 Gew.-% PTFE auf.

### Beispiel 2: Testung der Katalysatoren in einer Synthesegastestanlage

Die Aktivitäten hinsichtlich des Umsatzes von NO_{X} von Vergleichskatalysator und erfindungsgemäßem Katalysator wurden in einer Synthesegastestanlage bei unterschiedlichen Wassergehalten des Synthesegases bestimmt.

**Tabelle 1:**

| Zusammensetzung des Synthesegases | |
|---|---|
| NO | 500 Vol. ppm |
| O₂ | 4,5 Vol. % |
| N₂ | Rest |
| H₂O | variabel |
| Testgastemperatur | 170° C |
| NH₃/NO_{X} -Molverhältnis | 1,2 |
| Volumenstrom | 2,59 m_{N}³/h |
| Raumgeschwindigkeit SV | 16500 1/h |
| Spez. Katalysatorbelastung AV | 25 m/h |

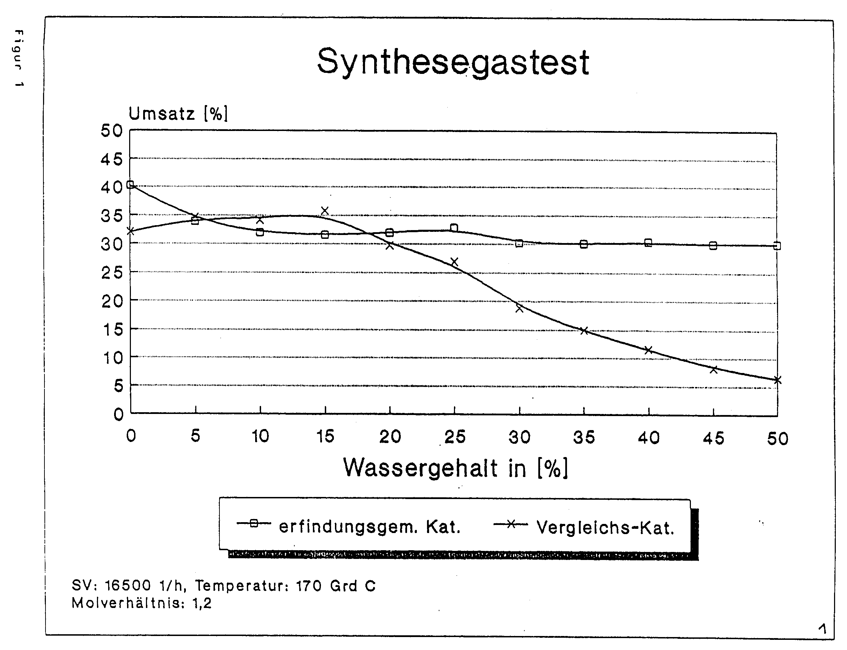

Die Ergebnisse dieser Aktivitätsmessungen sind in der Tabelle 2 aufgelistet und in Figur 1 grafisch dargestellt. Die Aktivitätslinie des Vergleichskatalysators zeigt einen deutlichen Aktivitätsabfall, beginnend ab Wassergehalten größer 15 %. Schon bei 30 % verfügt der Vergleichskatalysator nur noch über die halbe Aktivität. Zum Ausgleich dieses Aktivitätsverlustes müßte in einer Rauchgasreinigungsanlage ein Katalysator mit doppeltem Katalysatorvolumen vorgehalten werden. Der erfindungsgemäße Katalysator behält hingegen unabhängig vom Wassergehalt seine Aktivität.

**Tabelle 2**

| Aktivitätsmessungen im Synthesegas | | | | | | |
|---|---|---|---|---|---|---|
| H₂O-Gehalt [Vol.%] | erfindungsgem. Katalysator | | | Vergleichskatalysator | | |
| | NO_{Ein} [ppm] | NO_{Aus} [ppm] | Umsatz [%] | NO_{Ein} [ppm] | NO_{Aus} [ppm] | Umsatz [%] |
| 0 | 500 | 299 | 40,2 | 487 | 331 | 32,0 |
| 5 | 493 | 326 | 33,9 | 494 | 323 | 34,6 |
| 10 | 486 | 331 | 31,9 | 481 | 317 | 34,1 |
| 15 | 486 | 333 | 31,5 | 511 | 328 | 35,8 |
| 20 | 483 | 329 | 31,9 | 485 | 341 | 29,7 |
| 25 | 476 | 320 | 32,8 | 505 | 369 | 26,9 |
| 30 | 474 | 331 | 30,2 | 511 | 415 | 18,8 |
| 35 | 475 | 332 | 30,1 | 507 | 431 | 14,9 |
| 40 | 474 | 330 | 30,4 | 502 | 444 | 11,5 |
| 45 | 473 | 331 | 30,0 | 500 | 459 | 8,2 |
| 50 | 472 | 330 | 30,1 | 499 | 467 | 6,4 |

### Beispiel 3: Aktivitätstests in einer Pilotanlage bei verschiedenen Wassergehalten des Rauchgases

In einer Pilotanlage, die einer Erdgasfeuerung nachgeschaltet war, wurden die Katalysatoren unter Praxisbedingungen getestet. Der Volumenstrom des Rauchgases betrug 75 m_{N}³/h und entsprach einer Raumgeschwindigkeit von SV = 16500 1/h. Die NO_{X}-Eingangskonzentration variierte, je nach Betriebszustand, zwischen 520 und 560 ppm.

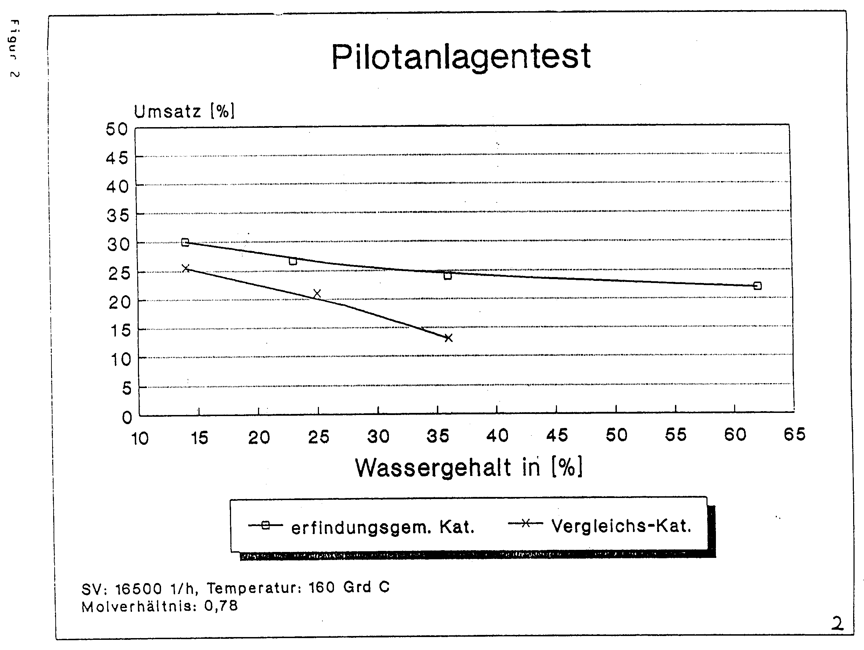

Beginnend mit der im Abgas der Erdgasfeuerung enthaltenen Wasserkonzentration von 14 Vol.-% wurde der Wassergehalt des Rauchgases durch Eindüsung von Dampf bis auf 62 Vol.-% erhöht. Der erfindungsgemäße Katalysator zeigte bei diesen Versuchen, die bei einem NH₃/NO_{X}-Molverhältnis von 0,78 und bei einer Temperatur von 160° C gefahren wurden, die deutlich besseren NO_{X} -Umsatzraten als der Vergleichskatalysator. Die Ergebnisse sind In Figur 2 grafisch dargestellt.

### Beispiel 4: Aktivitätstests in der Pilotanlage bei verschiedenen Rauchgastemperaturen

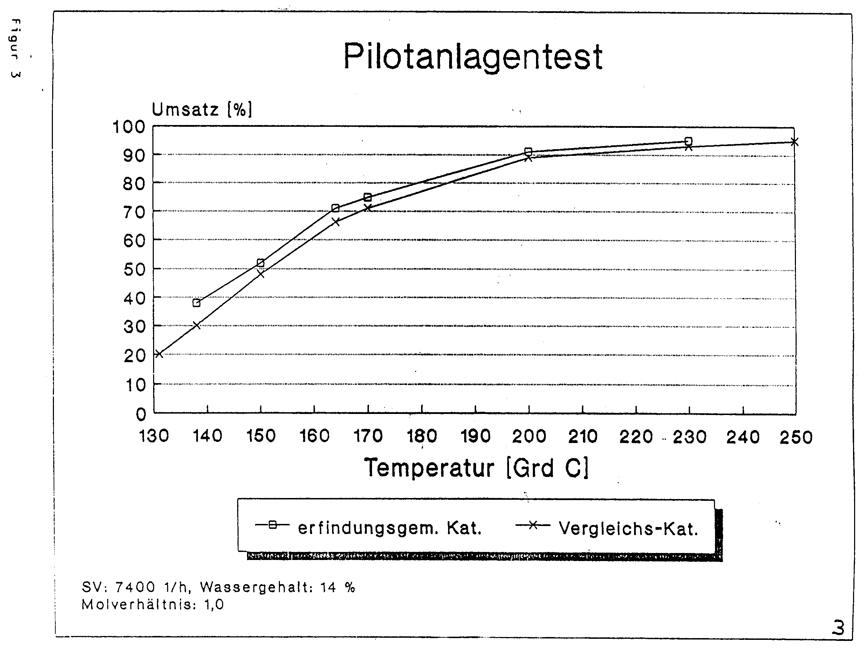

Im Figur 3 sind die Ergebnisse der NO_{X}-Umsatzmessungen in der Pilotanlage bei Rauchgastemperaturen zwischen 130 und 250° C aufgetragen. Der Wassergehalt lag mit 14 % im Bereich der geringsten Unterschiede, das NH₃/NO_{X}-Molverhältnis war bei diesen Versuchen auf 1,0 eingestellt. Trotz des niedrigen Wassergehaltes sind deutliche Unterschiede in der Leistungsfähigkeit der Katalysatoren zu erkennen.

Unterhalb einer Rauchgastemperatur von 130° C sind die Katalysatoren wegen der zu geringen Aktivität nicht mehr wirtschaftlich einsetzbar. Um bei diesen Temperaturen noch zu akzeptablen NO_{X}-Umsätzen zu kommen, müßten sehr große Katalysatorvolumina zur Verfügung gestellt werden. Oberhalb von 250° C wird der Vorteil des erfindungsgemäß mit PTFE beschichteten Katalysators gegenüber dem Vergleichskatalysator zunehmend geringer. Oberhalb Temperaturen von 330° C beginnt PTFE zu schmelzen und vermindert die Aktivität des Katalysators. Außerdem wird bei diesen Temperaturen kaum noch Wasser an Oberflächen adsorbiert, so daß eine Hydrophobierung hier ihren Sinn verliert.

In dem beanspruchten Temperaturbereich hat der erfindungsgemäße Katalysator jedoch eine gegenüber dem Vergleichskatalysator aus dem Stand der Technik deutlich verbesserte Leistungsfähigkeit gezeigt.

## Patentansprüche

1. DENOX-Katalysator für die Tieftemperatur-Entstickung von Rauchgasen,
**dadurch gekennzeichnet**,
daß der Katalysator hydrophob beschichtet ist.

2. Katalysator nach Anspruch 1
**dadurch gekennzeichnet**,
daß die hydrophobe Beschichtung aus einem hochtemperaturbeständigen organischen Fluorpolymer, vorzugsweise Polytetrafluorethylen, besteht und in einer Menge von 0,1 bis 5 Gew.-% relativ zum Gesamtgewicht des Katalysators aufgebracht ist.

3. Verfahren zur Herstellung eines Katalysators nach den Ansprüchen 1 oder 2,
**dadurch gekennzeichnet**,
daß die Beschichtung des DENOX-Katalysators mit einem organischen Fluorpolymer durch Sprühen oder Tauchen mit einer wäßrigen Dispersion des Polymers erfolgt, mit anschließendem Trocknen bis zur Gewichtskonstanz bei Temperaturen zwischen 100 und 140° C, gefolgt von einem Temperschritt bei Temperaturen oberhalb des Schmelzpunktes des Fluorpolymers zum Einschmelzen der auf der Katalysatoroberfläche abgeschiedenen Partikel der Dispersion zur Ausbildung der hydrophoben Beschichtung.

4. Verfahren nach Anspruch 3,
**dadurch gekennzeichnet**,
daß eine wäßrige Dispersion von Polytetrafluorethylen verwendet und der Temperschritt bei Temperaturen von 340 bis 380° C für die Dauer von 1 bis 3 Stunden vorgenommen wird.

5. Verfahren zur selektiven katalytischen Reduktion von Stickoxiden in Rauchgasen,
**dadurch gekennzeichnet**,
daß das zu behandelnde Rauchgas mittels Kohle- oder Gewebefilter gereinigt wird und anschließend die noch enthaltenen Stickoxide unter Zugabe eines Reduktionsmittels, vorzugsweise Ammoniak, bei Temperaturen zwischen 130 und 350° C an einem Katalysator nach Anspruch 1 oder 2 zu Stickstoff und Wasser reduziert werden.
